# EUROPEAN PATENT SPECIFICATION

(11) **EP 4 743 678 B1**
(45) Date of publication and mention of the grant of the patent: **16.09.2026**
(21) Application number: 25733761.8
(22) Date of filing: 17.06.2025
(51) Int. Cl.: F16B 15/00, A01G 17/08, F16B 7/04, F16B 2/08

(54) **STAPLE FOR A FASTENING SYSTEM AND FASTENING SYSTEM COMPRISING THE STAPLE**
KLAMMER FÜR EIN BEFESTIGUNGSSYSTEM UND BEFESTIGUNGSSYSTEM MIT DER KLAMMER
AGRAFE POUR SYSTÈME DE FIXATION ET SYSTÈME DE FIXATION COMPRENANT L'AGRAFE

(30) Priority: 01.10.2024 EP 24383054
(43) Date of publication of application: 20.05.2026
(73) Proprietor: DESARROLLOS ESPECIALES DE SISTEMAS DE ANCLAJE, S.A., 08014 Barcelona (ES)
(72) Inventor: LÓPEZ BARBARIN, Daniel, 31012 Pamplona Navarra (ES)
(74) Representative: Cueto, Sénida
(86) International application number: PCT/IB2025/056155
(87) International publication number: WO 2026/074328

(56) References cited:
- DE-C- 932 183
- US-A- 1 910 688
- US-A1- 2021 053 707

## Description

### Technical Field

The invention relates to a staple-type closing element for a fastening system, suitable, for example, in the agricultural sector for the clamping of two elements, for example, the stem of a plant and a guide element.

### Background Art

Staples are known in the state of the art. Documents US1910688A and DE932183C describe conventional U-shaped staples for applications other than the present invention.

Various systems are known in the state of the art for tying two elements by means of rigid or elastic fasteners.

The EP3794937A1 publication discloses a tool that provides a fastening system, in which a staple is passed through a fastening tape to prevent a detachment of these fastening components after tying. The system uses a conventional U-shaped staple. The retention method used, consisting in passing through the tape, may be inadequate when using tapes made of certain tear-sensitive materials. In such a case, the resistance of the bond provided could be drastically reduced when these tear-sensitive materials are pierced by the staple.

Another type of ring staples is also known, which close on themselves to form a ring and which can be used to embrace two or more wires, for example, for the closing of fences or cages. The WO2015162595A1 publication describes an apparatus and a method for tying two or more elements together, applicable in the agricultural sector or in other sectors such as the cable industry or the packaging sector. For this purpose, conventional C-shaped ringed staples provided with a central part and two arms are used, the staple being able to close to embrace, rather than pass through, a clamping element such as a cable or PVC plastic tube.

The WO2023242455A1 publication, with the same holder as the present invention, details the operation of a semi-automatic tool that provides an elastic or non-elastic tying of two elements, by means of a clamping element closed by a closing element. The described tool is particularly advantageous because it allows an elastic type of tying that minimises the strangulation of the plant during its growth, after the tying or training operation.

It is an objective of the present invention to provide an improved staple-type closing element, alternative to conventional staples, for a fastening system. The staple of the invention is applicable by means of a semi-automatic tying tool. The solution of the invention takes into account a possible risk of detachment of the clamping components after tying.

### Summary of Invention

The invention relates to a staple-type closing element according to claim 1. The invention also relates to a fastening system comprising the staple and to a tying tool using the fastening system.

Like other staples, the staple of the invention comprises a central part and two arms, the staple being capable of folding from an open position to a closed position. In the closed position, the staple is capable of surrounding and retaining a portion of a clamping element within an interior space delimited by the staple.

According to the invention the staple comprises a notch or groove, made in the central part of the staple on an outer face of the staple, the groove extending towards an inner face of the staple. In the transition to the closed position of the staple:
- a deformation and a tearing of a part of the staple material adjacent to the groove occurs simultaneously,
- side sections of the staple are brought closer to each other, and
- a fold with curvature is formed in the inner face of the staple, this fold being located between the side sections in a position facing the groove

The fold thus formed has a very small radius.

Preferably, the interior space delimited by the staple in the closed state adopts a substantially triangular shape. In addition, a retention area is formed, this retention area being comprised within the interior space and adjacent to the fold.

The main advantages of the invention, which will be explained in greater detail in the following section, are summarised below.

The use of the staple and the fastening system of the invention help increase the slip resistance of the clamping element once the staple is closed. In this way, the clamping element can withstand greater stretching than in the case of a conventional staple, without the clamping element slipping inside the staple. With the staple of the invention, it is not necessary to close the staple excessively to prevent the clamping element from slipping. Excessive closing of the staple could damage the clamping element, so that if the clamping element is stretched, it could break prematurely before its slipping.

The staple of the invention prevents the aforementioned problem, since its design helps to increase the force that opposes the sliding of the clamping element and, at the same time, prevents undesired damage and premature breakage of the clamping element. In summary, the staple of the invention makes it possible for the clamping element to slide while resisting the greatest possible stretching, thus preventing it from breaking, due to two reasons:
- it is not necessary to excessively close the staple of the invention to prevent premature slippage of the clamping element, which avoids damage to the clamping element as well as consequent reduction in strength; this is particularly important in the case of using a clamping element made of tear-sensitive materials; and
- as the staple does not need to be closed excessively, the clamping element is not damaged (the clamping element slides instead of breaking); the clamping element can thus slide progressively to absorb any occasional overstressing, thus preventing a sudden unwanted breakage due to excessive force exerted by the staple.

In addition, the groove feature helps to minimise the force that must be exerted by the tying tool to close or staple, resulting in a lighter and more energy-efficient tool.

Optionally, the arms of the staple protrude laterally a distance pmax shorter than or equal to 1 mm with respect to the side edges of the staple in its closed position. Alternatively, the staple arms can optionally be arranged without protruding laterally with respect to the side edges of the staple in their closed position. This results in a staple whose closed form is devoid of sharp protruding edges that could damage plants (if used in agriculture), people or industrial equipment that may come into contact with the staple.

Optionally, the penetration depth (d) of the groove towards the inner face of the staple is between 0.1 and 1 mm. Optionally, the groove has an angular amplitude (α) between 10° and 150°. The appropriate selection of the type of material and specific dimensions of the staple, within these preferred ranges, helps to provide adequate deformation and tearing during the closure of the staple. On the one hand, the groove should be large enough to allow for a triangular type staple closure with a small fold to minimise slippage of the clamping element. On the other hand, the groove must be small enough to provide controlled deformation and tearing, in the sense of preventing excessive tearing of the staple and weakening of the closure provided by the staple.

### Brief Description of Drawings

The details of the invention are shown in the accompanying figures, which are not intended to limit the scope of the invention:
**Fig.1**

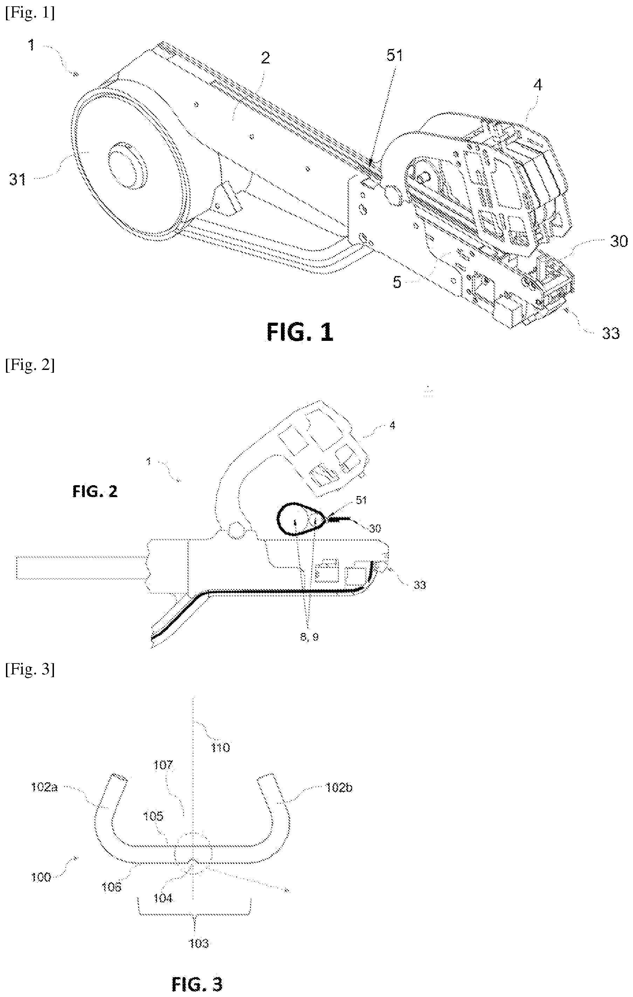

   [Fig.1] shows a perspective view of a tying tool using the components of the fastening system according to the present invention as consumables.
**Fig.2**
   [Fig.2] shows a section elevation view of one end of the tool of [Fig.1] after the tying operation of two elements.
**Fig.3**

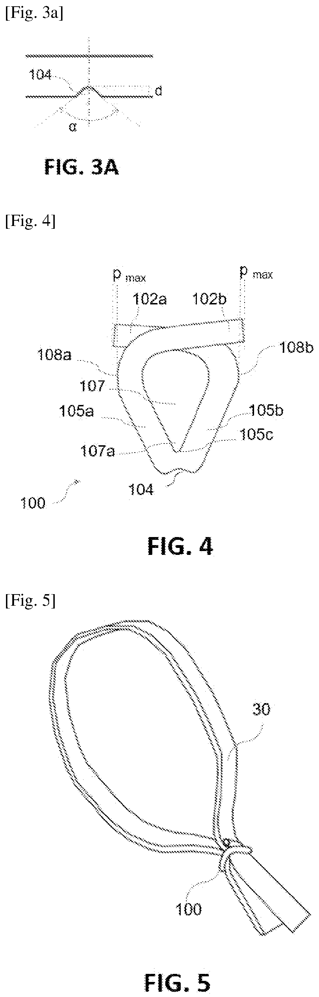

   [Fig.3] shows a front view of a first embodiment of the staple according to the invention in an opening position prior to tying.
**Fig.3a**
   [Fig.3a] shows a detail of the geometry of the staple groove of [Fig.3]
**Fig.4**
   [Fig.4] shows a front view of the staple of [Fig.3] in a closed position after tying.
**Fig.5**
   [Fig.5] shows one embodiment of the fastening system of the invention.
**Fig.6**

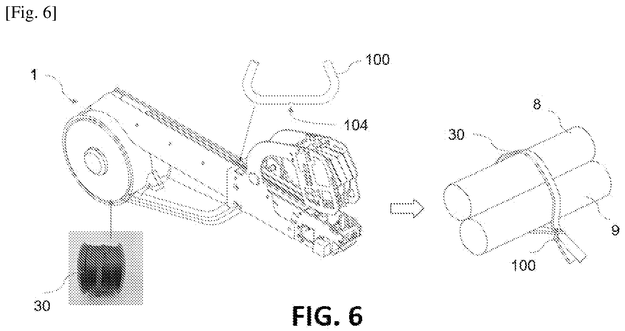

   [Fig.6] illustrates schematically the use of the elements of [Fig.1], [Fig.2], [Fig.3], [Fig.4] and [Fig.5].

### Description of Embodiments

A first aspect of the present invention relates to a closing element, namely a staple specifically designed to close a clamping element, both closing and clamping elements being consumables compatible with a semi-automatic tool used for an elastic tying of two elements, for example, a plant stem and a guide element.

A second aspect of the invention relates to a fastening system comprising the two consumables, the staple and the clamping element.

A third aspect of the invention relates to a tying tool that applies the fastening system.

[Fig.1] shows a perspective view of a tying tool that can use as consumables the components of the fastening system of the present invention. [Fig.2] shows a sectional view of one end of the tool of [Fig.1] after a tying operation of two elements. The tying tool (1) of the figures performs a tying of at least two elements (8, 9) by means of a clamping element (30) and a closing element (51) for closing the clamping element (30). For this purpose, the tool (1) comprises a number of main components, including a longitudinal body or handle (2) housing a set of closing elements (51), a spool (31) on which the clamping element (30) is wound and a set of mechanisms integrated in the tool (1). This set of mechanisms comprises a feed mechanism (33) of the clamping element (30), a clamping mechanism (4) and a closing mechanism (5) for closing the clamping element (30) by means of a closing element (51). The mechanisms are operated semi-automatically by means of a push button, being driven by a main motor, for driving the clamping mechanism (4) and the closing mechanism (5), and a secondary motor for driving the feed mechanism (33) of the clamping element (30). Publication WO2023242455A1, cited in the introductory section, describes in detail the operation of a tying tool (1) of the above-mentioned type. The tool (1) is particularly advantageous in that it allows the use of an elastic or non-elastic, tear-sensitive or non-tear-sensitive clamping element (30), providing an elastic binding of the elements (8, 9). This provides improved tying (in terms of resistance to breakage and slippage of the clamping element) and minimises the risk of an undesired strangulation effect during plant growth, compared to other tying systems that use more rigid clamping elements, such as cable or wire.

[Fig.3] shows a perspective of a first embodiment of a closing element according to the invention. This closing element is in particular a staple (100) suitable for closing and retaining a clamping element (30). The staple (100) comprises a central part (103) and two arms (102a, 102b). The staple (100) is capable of adopting a closing position ([Fig.4]) in which the staple (100) surrounds and retains a portion of the clamping element (30) (not shown) within an interior space (107) delimited by the staple (100). This interior space (107) is intended to receive and retain a clamping element (30) when the staple (100) is in the closed position, as illustrated in [Fig.5].

As can also be seen in [Fig.3], the staple (100) of the invention, comprising an inner zone or face (105) and an outer zone or face (106), has the particularity of comprising an indentation, notch or groove (104). This groove (104) is made in the central part (103) on the outer face (106). The groove (104) projects or extends towards the inside of the staple (100) in the direction of the inner face (105). When the staple (100) is closed to reach the position illustrated in [Fig.4], a deformation and at least a slight tearing of a part of the material of the staple (100) adjacent to the groove (104) takes place.

Optionally, as in the particular embodiment of [Fig.3], the staple (100) is a folded metal rod with a substantially straight central part (103) located between two arms (102a, 102b). The arms (102a, 102b) have a curved shape extending from the central part (103) towards a central axis (110) of the staple (100). Thus, the staple (100) adopts a C-shape when open ([Fig.3]). In the closed position ([Fig.4]), the arms (102a, 102b) cross each other. This way of closing the staple (100) helps to prevent damage to the clamping element (30) after closing or stapling.

[Fig.4] shows the staple (100) in a closed position, which is the position that the staple (100) adopts when it is applied by a tool, such as the semi-automatic tool (1) of Figs. 1 and 2, to close the clamping element (30), as shown in [Fig.2]. In the situation shown in [Fig.2], the tool (1) has caused the staple (100) to close.

As can be seen in the particular embodiment of [Fig.4], in the closed position of the staple (100), a fold (105c) with a very small radius is formed in the inner face (105) of the staple (100) at a location facing the groove (104). As can also be seen in [Fig.4], side sections (105a, 105b) of the staple (100), located at both sides of the fold (105c), are brought closer together and the interior space (107) is formed until the staple (100) adopts a substantially triangular shape. A retention area (107a) comprised within the interior space (107) is formed, this retention area (107a) being adjacent to the fold (105c). This substantially triangular shape of the closed staple (100) is delimited by the crossed arms (102a, 102b), by the side sections (105a, 105b) and by the fold (105c) which has a reduced radius of curvature. The triangular shape of the closed staple (100) has outer side edges (108a, 108b) defining the other two vertices of the triangular shape. The triangular shape of the closed staple (100) is not to be interpreted in a narrow sense, i.e. it is a substantially triangular shape, not an exact geometrical triangle.

As already indicated, during the closing of the staple (100), the material of the staple (100) is capable of bending to adopt the position shown in [Fig.4] and, additionally, at least a slight tearing of material takes place in the area adjacent to the groove (104). This tearing groove (104) is provided in the part of the staple (100) that is subjected to tensile stress during the deformation that takes place to achieve closure of the staple (100). The deformation weakens the section of the staple (100) and, simultaneously, causes the start of the tearing of the material. As a result, the side sections (105a, 105b) are brought closer together and the retention zone (107a) comprised in the interior space (107) is formed. In this way, the staple (100) of the invention allows a controlled deformation and a controlled rupture of material in an area or section adjacent to the groove (104), providing a reduced closure interior space (107) of a substantially triangular shape, for an adequate retention of the clamping element (30).

This triangular-type closure provided by the staple (100) of the invention helps to increase the force opposing the slipping of the clamping element (30) and, at the same time, prevents undesired premature damage and breakage of the clamping element (30). In contrast, the use of other conventional C-shaped staples could lead to undesired detachment of the clamping element after stapling. When closing these conventional staples, the side sections are further apart and the lower retaining area has a more open folding radius of curvature compared to the fold (105c) of the invention. This can lead to a higher risk of a clamping element slipping, because a circular retention area of greater width is formed as the staple is devoid of a tearing groove.

Preferably, in the closed position, the arms (102a, 102b) of the staple (100) are arranged without protruding laterally with respect to the side edges (108a, 108b) or protrude slightly with respect to these side edges (108a, 108b). In this way, the triangular-shaped closure provided by the staple (100) is free of protruding edges which could cause undesired damage.

Optionally, as in the embodiment shown in [Fig.4], the arms (102a, 102b) of the staple (100) protrude laterally a distance pmax shorter than or equal to 1 mm with respect to the side edges (108a, 108b) of the triangular shape when the staple (100) is closed.

Alternatively, optionally, the arms (102a, 102b) of the staple (100) are arranged without protruding laterally with respect to the side edges (108a, 108b) of the triangular shape when the staple (100) is closed.

Optionally, the groove (104) of the staple (100) of the invention can be manufactured by stamping, machining or other means.

The dimensions of the groove (104) will be defined by the type of material used to manufacture the staple (100), the groove (104) being large enough to cause at least slight tearing of the material of the staple (100) but small enough to prevent excessive breakage or weakening of the section of the staple (100) in that area.

Preferably, the staple (100) is made of steel. Optionally, as in the detail shown in [Fig.3a], the penetration depth (d) of the groove (104) towards the inner face (105) of staple (100) is between 0.1 and 1 mm. Optionally, the groove (104) has an angular amplitude (α) between 10° and 150°. The appropriate selection of the particular steel type and dimensions, within these preferred ranges, helps to provide adequate and controlled deformation and tearing when the staple (100) is closed.

As already indicated, the staple (100) of the invention can be used in combination with a clamping element (30) supplied by a tying tool (1) which uses the staples (100) and the clamping element (30) as consumables, providing elastic tying with the advantages already explained.

Another aspect of the invention is a fastening system for tying at least two elements (8, 9), for example a plant stem (8) and a guide element (9). As can be seen in the particular embodiment of [Fig.5], the fastening system comprises at least one staple (100) according to the invention and a clamping element (30) with a part that is surrounded and retained by the staple (100).

Optionally, the clamping element (30) is made of an elastomeric material, e.g. Thermoplastic Vulcanised (TPV), rubber, etc.

The clamping element (30) is usually supplied wound on a spool (31) which can be loaded into the tying tool (1). Optionally, the clamping element (30) is rectangular and has approximate dimensions of 6 x 1.6 mm.

The invention also relates to a tool (1) for the elastic tying of at least two elements (8, 9), by means of a clamping element (30) and a closing element, the closing element being the characterising staple (100) of the invention. The tool (1) is provided with a closing mechanism (5) actuated by a motor to cause the staple (100) to close around the clamping element (30). Optionally, as in the embodiment shown in the figures, the clamping element (30) is provided wound on a spool (31) incorporated in the tool (1).

## Claims

1. Staple (100) comprising a central part (103) and two arms (102a, 102b), the staple (100) configured to fold from an open position to a closed position in which the staple (100) surrounds and retains a portion of a clamping element (30) within an interior space (107) delimited by the staple (100), wherein the staple (100) comprises a groove (104) made in the central part (103) on an outer face (106) of the staple (100), the groove (104) extending towards an inner face (105) of the staple (100), wherein in the transition of the staple (100) to the closed position: a deformation and a tearing of a part of the staple material adjacent to the groove (104) occurs; side sections (105a, 105b) of the staple (100) are brought closer to each other; **characterized in that** a fold (105c) with curvature is formed in the inner face (105) of the staple (100), the fold (105c) being located between the side sections (105a, 105b) in a position facing the groove (104).

2. Staple (100), according to claim 1, wherein, in the transition to the closed position, the interior space (107) adopts a substantially triangular shape delimited by the fold (105c), by the arms (102a, 102b), by the side sections (105a, 105b), wherein a retention area (107a) comprised within the interior space (107) and adjacent to the fold (105c) is formed.

3. Staple (100), according to claim 1 or 2, wherein the arms (102a 102b) have a curved shape from the central part (103) towards a central axis (110) of the staple (100), so that the staple (100) adopts a C-shape when open, and wherein the arms (102a, 102b) cross each other to adopt the closed position.

4. Staple (100), according to claim 3, wherein the arms (102a, 102b) protrude laterally a distance pmax shorter than or equal to 1 mm with respect to side edges (108a, 108b) of the staple (100) in its closed position.

5. The staple (100), according to claim 3, wherein the arms (102a, 102b) are arranged without protruding laterally with respect to side edges (108a, 108b) of the staple (100) in its closed position.

6. Staple (100), according to claim 1, wherein the penetration depth (d) of the groove (104) towards the inner face (105) of the staple (100) is between 0.1 and 1 mm.

7. Staple (100), according to claim 1, wherein the groove (104) has an angular amplitude (α) between 10° and 150°.

8. Staple (100), according to claim 1, wherein the penetration depth (d) of the groove (104) towards the inner face (105) of the staple (100) is between 0.1 and 1 mm and wherein the groove (104) has an angular amplitude (α) between 10° and 150°.

9. Fastening system for tying at least two elements (8, 9), for example a plant stem (8) and a guide element (9), wherein the system comprises a clamping element (30) and at least one staple (100) according to any one of claims 1 to 8.

10. Fastening system, according to the preceding claim, wherein the clamping element (30) is made of an elastomeric material.

11. Tool (1) for elastic tying of at least two elements (8, 9) by means of a clamping element (30) and a closing element, wherein the closing element is a staple (100) according to any one of claims 1 to 8, the tool (1) being provided with a closing mechanism (5) actuated by a motor to cause the staple (100) to close around the clamping element (30).

12. Tool (1), according to the preceding claim, wherein the clamping element (30) is provided wound on a spool (31) of the tool (1).

## Patentansprüche

1. Heftklammer (100), die einen Mittelteil (103) und zwei Schenkel (102a, 102b) umfasst, wobei die Heftklammer (100) so ausgebildet ist, dass sie sich aus einer offenen Position in eine geschlossene Position zusammenfalten lässt, in der die Heftklammer (100) einen Abschnitt eines Spannelements (30) innerhalb eines durch die Heftklammer (100) begrenzten Innenraums (107) umgibt und zurückhält, wobei die Heftklammer (100) eine Nut (104) aufweist, die im Mittelteil (103) an einer Außenfläche (106) der Heftklammer (100) ausgebildet ist, wobei sich die Nut (104) in Richtung einer Innenfläche (105) der Heftklammer (100) erstreckt, wobei beim Übergang der Heftklammer (100) in die geschlossene Position: es zu einer Verformung und einem Aufreißen des an die Nut (104) angrenzenden Stapelmaterials kommt; die Seitenabschnitte (105a, 105b) der Heftklammer (100) einander angenähert werden; **dadurch gekennzeichnet, dass** an der Innenfläche (105) der Heftklammer (100) eine gekrümmte Falte (105c) ausgebildet wird, wobei sich die Falte (105c) zwischen den Seitenabschnitten (105a, 105b) an einer der Nut (104) zugewandten Stelle befindet.

2. Heftklammer (100) nach Anspruch 1, wobei der Innenraum (107) beim Übergang in die geschlossene Position eine im Wesentlichen dreieckige Form annimmt, die durch die Falte (105c), durch die Schenkel (102a, 102b) und die Seitenabschnitte (105a, 105b) begrenzt wird, wobei ein im Innenraum (107) enthaltener und an die Falte (105c) angrenzender Rückhaltebereich (107a) gebildet wird.

3. Heftklammer (100) nach Anspruch 1 oder 2, wobei die Schenkel (102a, 102b) vom Mittelteil (103) in Richtung einer Mittelachse (110) der Heftklammer (100) eine gekrümmte Form aufweisen, sodass die Heftklammer (100) im geöffneten Zustand eine C-Form annimmt, und wobei sich die Schenkel (102a, 102b) kreuzen, um die geschlossene Position einzunehmen.

4. Heftklammer (100), gemäß Anspruch 3, wobei die Arme (102a, 102b) in der geschlossenen Position der Heftklammer (100) seitlich um einen maximalen Abstand von höchstens 1 mm über die Seitenkanten (108a, 108b) der Heftklammer (100) hinausragen.

5. Heftklammer (100) gemäß Anspruch 3, wobei die Arme (102a, 102b) so angeordnet sind, dass sie in der geschlossenen Position der Heftklammer (100) nicht seitlich über die Seitenkanten (108a, 108b) der Heftklammer (100) hinausragen.

6. Heftklammer (100) nach Anspruch 1, wobei die Eindringtiefe (d) der Nut (104) in Richtung der Innenfläche (105) der Heftklammer (100) zwischen 0,1 und 1 mm liegt.

7. Heftklammer (100) nach Anspruch 1, wobei die Nut (104) eine Winkelamplitude (α) zwischen 10° und 150° aufweist.

8. Heftklammer (100) nach Anspruch 1, wobei die Eindringtiefe (d) der Nut (104) in Richtung der Innenfläche (105) der Heftklammer (100) zwischen 0,1 und 1 mm beträgt und wobei die Nut (104) eine Winkelamplitude (α) zwischen 10° und 150° aufweist.

9. Befestigungssystem zum Verbinden von mindestens zwei Elementen (8, 9), beispielsweise eines Pflanzenstiels (8) und eines Führungselements (9), wobei das System ein Spannelement (30) und mindestens eine Heftklammer (100) gemäß einem der Ansprüche 1 bis 8 umfasst.

10. Befestigungssystem gemäß dem vorstehenden Anspruch, wobei das Spannelement (30) aus einem elastomeren Werkstoff besteht.

11. Werkzeug (1) zum elastischen Verbinden von mindestens zwei Elementen (8, 9) mittels eines Spannelements (30) und eines Verschlusselements, wobei das Verschlusselement eine Heftklammer (100) gemäß einem der Ansprüche 1 bis 8 ist, wobei das Werkzeug (1) mit einem motorbetriebenen Schließmechanismus (5) versehen ist, der bewirkt, dass sich die Heftklammer (100) um das Spannelement (30) schließt.

12. Werkzeug (1) gemäß dem vorstehenden Anspruch, wobei das Spannelement (30) auf eine Spule (31) des Werkzeugs (1) aufgewickelt vorgesehen ist.

## Revendications

1. Agrafe (100) comprenant une partie centrale (103) et deux bras (102a, 102b), l'agrafe (100) étant configurée pour se replier, d'une position ouverte à une position fermée dans laquelle l'agrafe (100) entoure et retient un segment d'un élément de serrage (30) à l'intérieur d'un espace intérieur (107) délimité par l'agrafe (100), où l'agrafe (100) comprend une rainure (104) logée dans la partie centrale (103) d'une face extérieure (106) de l'agrafe (100), la rainure (104) s'étendant vers une face intérieure (105) de l'agrafe (100), dans laquellew3e pendant la transition de l'agrafe (100) vers la position fermée, une déformation et une déchirure d'une partie du matériau de l'agrafe (100) adjacent à la rainure (104) se produisent ; des sections latérales (105a, 105b) de l'agrafe (100) sont rapprochées l'une de l'autre; **caractérisé en ce qu'**un pli (105c) avec une courbature se forme sur la face intérieure (105) de l'agrafe (100), le pli (105c) étant situé entre les sections latérales (105a, 105b) dans une position en face de la rainure (104).

2. Agrafe (100) conformément à la revendication 1, où, pendant la transition vers la position fermée, l'espace intérieur (107) adopte une forme substantiellement triangulaire délimitée par le pli (105c), par les bras (102a, 102b), par les sections latérales (105a, 105b) où une zone de retenue (107a) comprise dans l'espace intérieur (107) et adjacent au pli se forme.

3. Agrafe (100), conformément à la revendication 1 ou 2, où les bras (102a, 102b) ont une forme courbe à partir de la partie centrale (103) vers un axe central (110) de l'agrafe (100), de telle sorte que l'agrafe (100) adopte une forme en C lorsqu'elle est ouverte, et où les bras (102a, 102b) s'entrecroisent pour adopter la position fermée.

4. Agrafe (100), conformément à la revendication 3, où les bras (102a, 102b) dépassent latéralement d'une distance pmax inférieure ou égale à 1 mm par rapport aux bords latéraux (108a, 108b) de l'agrafe (100) dans sa position fermée.

5. L'agrafe (100) conformément à la revendication 3, où les bras (102a, 102b) sont disposés sans dépasser latéralement par rapport aux bords latéraux (108a, 108b) de l'agrafe (100) en position fermée.

6. Agrafe (100) conformément à la revendication 1, où la profondeur de pénétration (d) de la rainure (104) vers la face intérieure (105) de l'agrafe (100) est comprise entre 0,1 et 1 mm.

7. Agrafe (100) conformément à la revendication 1, où la rainure (104) a une amplitude angulaire (α) comprise entre 10° et 150°.

8. Agrafe (100), conformément à la revendication 1, où la profondeur de pénétration (d) de la rainure (104) vers la face intérieure (105) de l'agrafe (100) est comprise entre 0,1 et 1 mm et où la rainure (104) a une amplitude angulaire (α) comprise entre 10° et 150°.

9. Système de fixation pour unir au moins deux éléments (8, 9), par exemple une tige de plante (8) et un élément de guidage (9) où le système comprend un élément de serrage (30) et au moins une agrafe (100) conformément à l'une quelconque des revendications 1 à 8.

10. Système de fixation conformément à la revendication précédente, où l'élément de serrage (30) est fabriqué en matériau élastomère.

11. Outil (1) pour ligature élastique d'au moins deux éléments (8, 9) au moyen d'un élément de serrage (30) et un élément de fermeture, où l'élément de fermeture est une agrafe (100) conformément à l'une des revendications 1 à 8 quelconque, l'outil (1) étant muni d'un mécanisme de fermeture (5) actionné par un moteur pour faire se fermer l'agrafe (100) autour de l'élément de serrage (30).

12. Outil (1) conformément à la revendication précédente, où l'élément de serrage (30) est fourni enroulé autour d'une bobine (31) de l'outil.
